# EUROPÄISCHE PATENTANMELDUNG

(11) **EP 0 903 551 A2**
(43) Veröffentlichungstag der Anmeldung: **24.03.1999**
(21) Anmeldenummer: 98112682.4
(22) Anmeldetag: 09.07.1998
(51) Int. Cl.: F26B 17/04

(54) **Filterbandtrockner**

(30) Priorität: 17.09.1997 DE 19740858
(71) Anmelder: STARCOSA - TAG, 38122 Braunschweig (DE)
(72) Erfinder: Bühl, Thomas, Dipl.-Ing., 38120 Braunschweig (DE); Falk, Heiko, Dipl.-Ing., 38304 Wolfenbüttel (DE); Hafemann, Hartmut, Dipl.-Ing., 31275 Lehrte (DE); Hulshof, Otto, Ing., 7161 EM Neede (NL)
(74) Vertreter: Gramm, Werner, Prof. Dipl.-Ing.

(57) **Zusammenfassung**

Die Erfindung betrifft einen Filterbandtrockner, insbesondere Sprühtrockner, mit einem um Umlenkrollen (2,3) geführten, mit seinem Obertrum (4a) auf einer Bandauflage geführten, endlos umlaufenden Band (4), das das zu trocknende, auf das Band aufgebrachte, vorzugsweise aufgesprühte Produkt als Produktschicht durch zumindest eine Trocknungs- (A,B) und eine nachgeschaltete Kühlungszone (C) transportiert, wo Trocknungs- und Kühlluft durch die Produktschicht und durch das Band (4) hindurchgesaugt und unterhalb des Bandes abgeführt werden, ferner mit einem Bandführungssystem für die seitliche Ausrichtung des Bandes bei seinem Umlauf, und mit einem integrierten Bandreinigungssystem. Zur Erhöhung der Betriebssicherheit wird erfindungsgemäß vorgeschlagen, daß das Bandführungssystem durch je einen an den Seitenrandbereichen (4c) des Bandes (4) befestigten V-Riemen (14) gebildet ist, die jeweils in eine ihnen zugeordnete ringförmige V-Nut (15) in den Umlenkrollen (2) eingreifen.

## Beschreibung

Die Erfindung betrifft einen Filterbandtrockner, insbesondere Sprühtrockner, mit einem um Umlenkrollen geführten, mit seinem Obertrum auf einer Bandauflage geführten, endlos umlaufenden Band, das das zu trocknende, auf das Band aufgebrachte, vorzugsweise aufgesprühte Produkt als Produktschicht durch zumindest eine Trocknungs- und eine nachgeschaltete Kühlungszone transportiert, wo Trocknungs- und Kühlluft durch die Produktschicht und durch das Band hindurchgesaugt und unterhalb des Bandes abgeführt werden, ferner mit einem Bandführungssystem für die seitliche Ausrichtung des Bandes bei seinem Umlauf, und mit einem integrierten Bandreinigungssystem.

Eine derartige Ausführungsform läßt sich der EP 0 344 375 A1 entnehmen. Außerdem ist in der nachfolgend im einzelnen erläuterten Figur 1 der Stand der Technik in Form einer schematischen Darstellung eines derartigen Filterbandtrockners gezeigt. Diese schematische Darstellung ist einem Prospekt der Anmelderin entnommen.

Bei vorbekannten Filterbandtrocknern der eingangs beschriebenen Bauart ist ein Bandführungssystem vorgesehen, bei dem die Führung des umlaufenden Bandes mittels Leitrollen erfolgt, auf denen sich das umlaufende Band abstützt, und die in Axialrichtung verschiebbar sind. Diese Axialverschiebung wird gesteuert von seitlichen Kontaktgebern, die den Seitenrand des umlaufenden Bandes abtasten und bei einem Verlauf des Bandes ein Signal abgeben, das eine Axialverschiebung der Leitrolle zur Rückführung des Bandes hervorruft.

Diese Bandführungssysteme sind hinsichtlich der Hygiene problematisch, da ihre Reinhaltung bzw. Reinigung schwierig ist. Hieraus entstehen überdies Betriebsunsicherheiten mit entsprechenden Wartungs- und Betriebskosten.

Der Erfindung liegt die Aufgabe zugrunde, die Bandführung insbesondere hinsichtlich der Betriebssicherheit sowie der Hygiene zu verbessern.

Diese Aufgabe wird erfindungsgemäß dadurch gelöst, daß das Bandführungssystem durch je einen an den Seitenrandbereichen des Bandes befestigten V-Riemen gebildet ist, die jeweils in eine ihnen zugeordnete ringförmige V-Nut in den Umlenkrollen eingreifen.

Erfindungsgemäß dient somit der in den Seitenrandbereich des Bandes eingepreßte oder aber auf diesen aufvulkanisierte V-Riemen in Verbindung mit den V-Nuten der Umlenkrollen als Bandführung.

Dabei ist es vorteilhaft, wenn der Boden der ringförmigen V-Nut in Umfangsrichtung verteilte Langlöcher bzw. Schlitze aufweist, die in einen in axialer Richtung nach außen offenen Ringraum der Umlenkrolle münden. Hierdurch ist eine besonders einfache und damit zuverlässige Reinigung der V-Nuten, z.B. durch Ausblasen mit Druckluft, möglich.

Hinsichtlich der Bandführung und -abstützung ist es besonders vorteilhaft, wenn sich im Obertrum des Bandes der V-Riemen zwischen der vorderen und hinteren Umlenkrolle auf einem quer zum Band schräg nach innen und unten geneigten Gleitblech abstützt. Hier ergibt sich eine durchgehende, besonders hygienische Abstützung, die den korrekten Bandlauf unterstützt.

Ferner ist es zweckmäßig, wenn das Gleitblech mit dem Boden eines darüber angeordneten Luftkastens einen den zugeordneten Randbereich des Bandes aufnehmenden Spalt bildet, über dem sich in Bandlängsrichtung erstreckende, unmittelbar oberhalb des Bandes angeordnete Luftaustrittsschlitze befinden. Hierdurch läßt sich eine Zentrierung der Produktschicht auf dem luftdurchlässigen Bereich des Band-Obertrums sicherstellen.

Im Rahmen des Bandreinigungssystems ist es zweckmäßig, wenn das Untertrum des Bandes einen Produktraum, eine Bandwaschkammer, eine separate Sperrluftkammer und/oder eine Bandtrocknungskammer durchläuft, die durch eine Lufttrennstelle voneinander getrennt sein können, in der das Band mit seinen V-Riemen jeweils zwischen abgeschrägten Nutwandungen geführt ist, in denen Luftdüsen münden.

Erfindungsgemäß entfällt somit eine eigenständige Bandführung mit der hierfür erforderlichen Hilfsenergie, Steuereinheit und dergl. Es entfallen ferner die zur Verschmutzung neigenden und besonders schwer zu reinigenden Lenkrollen. Erfindungsgemäß werden die Reinigungsmöglichkeiten und damit die Hygiene erheblich verbessert. Aufgrund der erfindungsgemäß vorgesehenen durchgängigen Bandführung ergibt sich eine höhere Betriebssicherheit. Der bisher erforderliche Bedienungsaufwand entfällt. Der Wartungsaufwand wird verringert, wodurch die Betriebskosten gesenkt werden können. Insgesamt weist das Bandsystem eine höhere Stabilität auf.

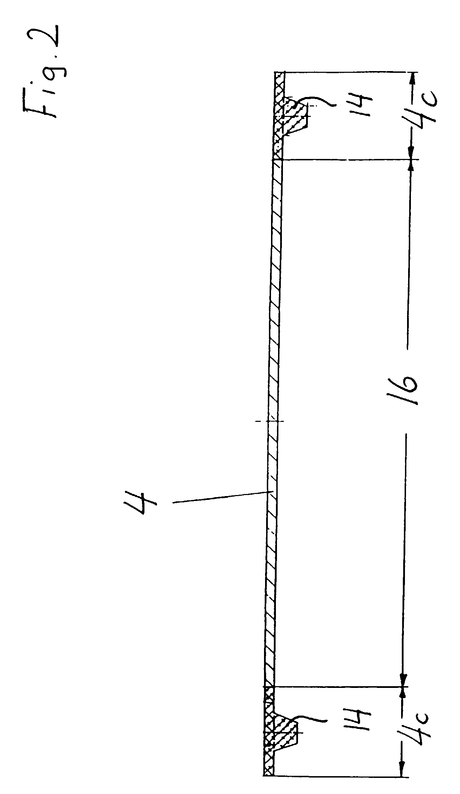

Weitere Merkmale der Erfindung sind Gegenstand der Unteransprüche und werden mit weiteren Vorteilen der Erfindung anhand eines Ausführungsbeispieles in den Figuren 2 bis 5 näher erläutert.

In der Zeichnung sind sowohl der Stand der Technik als auch eine als Beispiel dienende Ausführungsform der Erfindung dargestellt. Es zeigen:
- **Figur 1**: als Stand der Technik in schematischer Darstellung einen Längsschnitt durch einen Sprühtrockner mit integriertem Bandsystem und als Blockschaltdiagramm Produkt- und Luftführung;
- **Figur 2**: einen Querschnitt durch ein Filterband gemäß der Erfindung;
- **Figur 3**: den linken Seitenrandbereich des Bandes gemäß Figur 2 mit einem Ausschnitt einer Umlenkrolle;
- **Figur 4**: den rechten Seitenrandbereich des Bandes gemäß Figur 2 mit Abstützeinrichtungen und einem Seitenluftkasten; und
- **Figur 5**: den linken Seitenrandbereich des im Untertrum geführten Bandes gemäß Figur 2 im Bereich einer Lufttrennstelle.

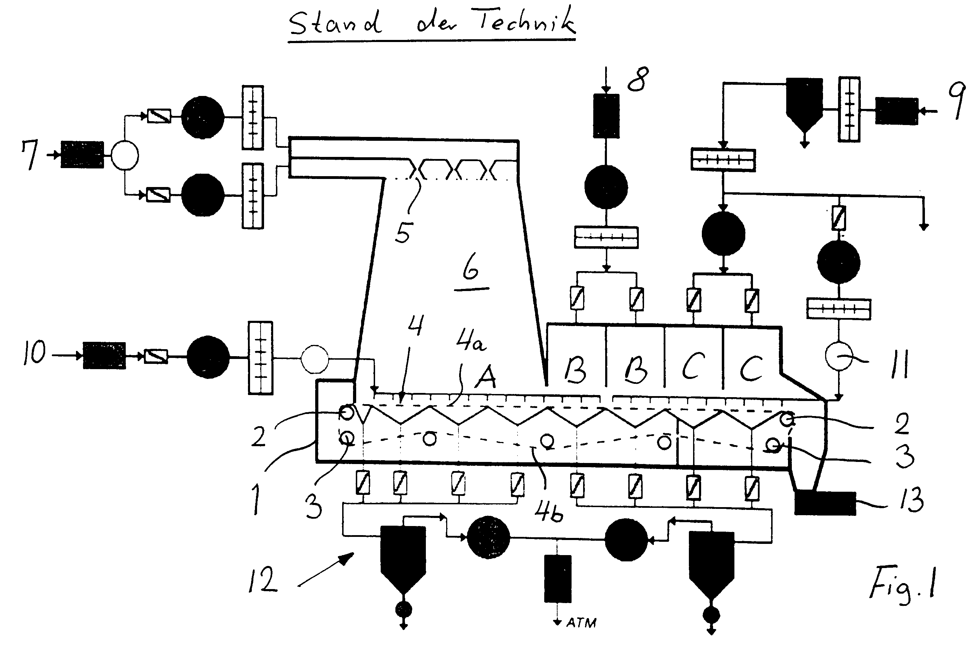

Gemäß Figur 1 umschließt ein Maschinengehäuse 1 ein um obere und untere Umlenkrollen 2, 3 endlos umlaufendes, porös ausgebildetes Band 4. Das zu trocknende Produkt wird mittels Düsen 5 in einem Turmkopf zerstäubt und fällt mit einer Restfeuchte von z.B. bis zu 30° auf das Band 4. Auf diesem bildet sich in Abhängigkeit vom Produkt eine Schicht, die mit dem Band 4 aus einer Primärtrocknungszone A in einen Agglomerationsbereich bzw. einen sekundären Trocknungsbereich B und anschließend in eine Kühlzone C gefördert wird. Die Trocknungs- und Kühlluft wird durch die Produktschicht und durch das Band 4 hindurchgesaugt und unterhalb des Bandes 4 abgeführt. Hierdurch entstehen staubarme Produkte, da der Pulverfeinanteil von der Produktschicht aufgenommen und aufgrund des relativ hohen Feuchteanteils gebunden wird. Besonders geeignet ist dieses System bei thermoplastischen, hygroskopischen und temperaturempfindlichen Gütern sowie bei stark öl- und fetthaltigen Produkten.

In Figur 1 sind noch eingezeichnet eine Primärluftzufuhr 7, eine Nachtrocknungsluftzufuhr 8, eine Kühlluftzufuhr 9, eine (beheizte) Seitenluftabdichtung 10 und eine (gekühlte) Seitenluftabdichtung 11. Die die Trocknungs- und Kühlluft aus dem Maschinengehäuse 1 absaugende Luftabführanlage ist generell mit dem Bezugszeichen 12 versehen.

In der Darstellung gemäß Figur 1 fördert das Obertrum 4a des Bandes 4 die Produktschicht von links nach rechts und wirft diese Produktschicht bei dem Umlauf um die rechte obere Umlenkrolle 2, die zugleich die Antriebsrolle für das Band 4 sein kann, in eine Produktabfördereinrichtung 13 ab, die z.B. eine Förderschnecke sein kann.

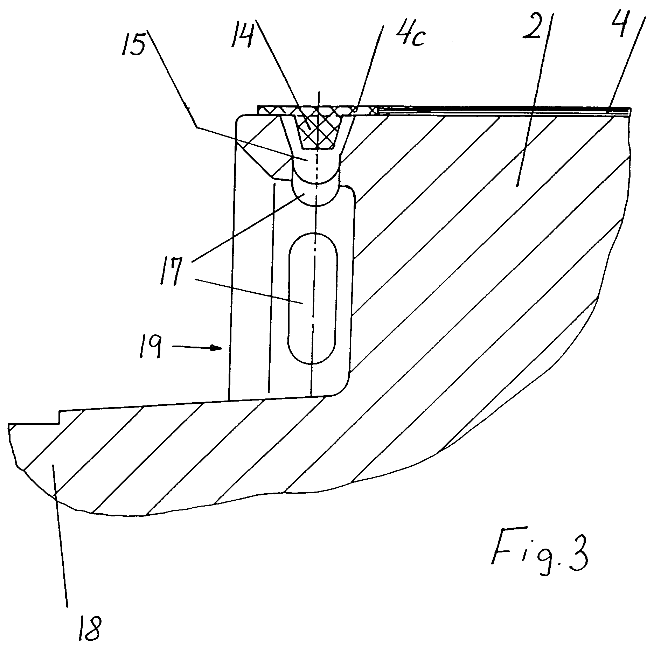

Für das in die Sprühtrocknungsanlage integrierte Bandsystem ist ein Bandführungssystem vorgesehen für die seitliche Ausrichtung des Bandes 4 bei seinem Umlauf. Dieses Bandführungssystem wird erfindungsgemäß durch je einen an den Seitenrandbereichen 4c des Bandes 4 befestigten V-Riemen 14 gebildet (siehe Figur 2), die jeweils in eine ihnen zugeordnete ringförmige V-Nut 15 in den oberen Umlenkrollen 2 eingreifen (siehe Figur 3). Dabei ist der V-Riemen 14 in den Seitenrandbereich 4c des Bandes 4 eingepreßt oder aber auf diesen aufvulkanisiert. In Figur 2 ist ferner angedeutet, daß die beiden Seitenrandbereiche 4c des Bandes 4 luftundurchlässig ausgebidet sind, was vorzugsweise mit einer luftundurchlässigen Verklebung erreicht wird. In Figur 2 ist der zwischen den beiden luftundurchlässigen Randzonen 4c eingeschlossene luftdurchlässige Bereich mit dem Bezugszeichen 16 gekennzeichnet.

Gemäß Figur 3 weist der Boden jeder ringförmigen V-Nut 15 in Umfangsrichtung verteilte Längslöcher 17 bzw. Schlitze auf, die in einen in axialer Richtung nach außen offenen einen Wellenzapfen 18 der oberen Umlenkrolle 2 ringförmig umschließenden Ringraum 19 münden.

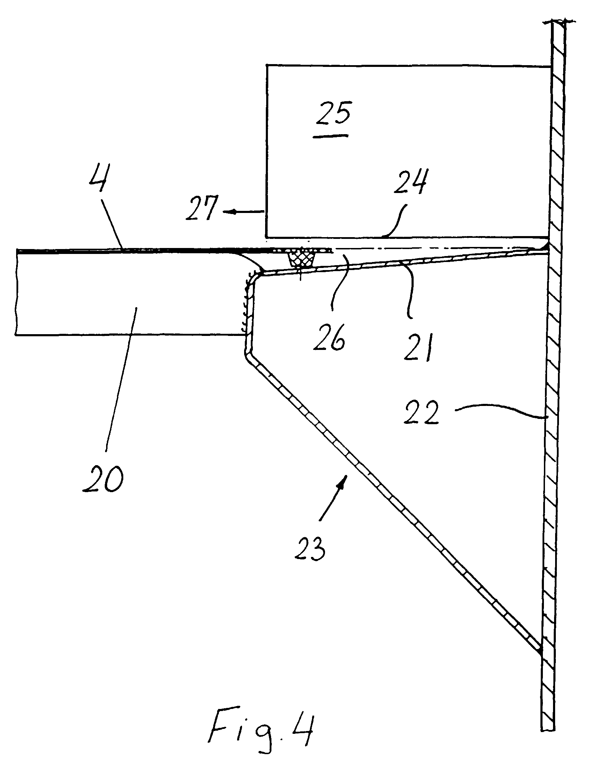

Alle Umlenkrollen 2 erstrecken sich jeweils über die volle Breite des Bandes 4, dessen Obertrum 4a zwischen der vorderen und hinteren Umlenkrolle 2 über oben abgerundete Flacheisen 20 abgestützt ist (siehe Figur 4), die ähnlich einem Fischgrätenmuster angeordnet sind. Figur 4 läßt ferner erkennen, daß sich im Obertrum 4a des Bandes 4 der V-Riemen 14 zwischen der vorderen und hinteren Umlenkrolle 2 auf einem quer zum Band 4 schräg nach innen und unten geneigten Gleitblech 21 abstützt. Letzteres ist Teil einer jeweils seitlich am Maschinengehäuse 22 befestigten Stützvorrichtung 23, zwischen denen die das Band-Obertrum 4a abstützenden Flacheisen 20 befestigt sind. Dabei bildet das Gleitblech 21 mit dem Boden 24 eines darüber angeordneten Luftkastens 25 einen den zugeordneten Randbereich 4c des Bandes 4 aufnehmenden Spalt 26, über dem sich in Bandlängsrichtung erstreckende, unmittelbar oberhalb des Bandes 4 angeordnete Luftaustrittsschlitze befinden, die durch den Pfeil 27 symbolisiert sind.

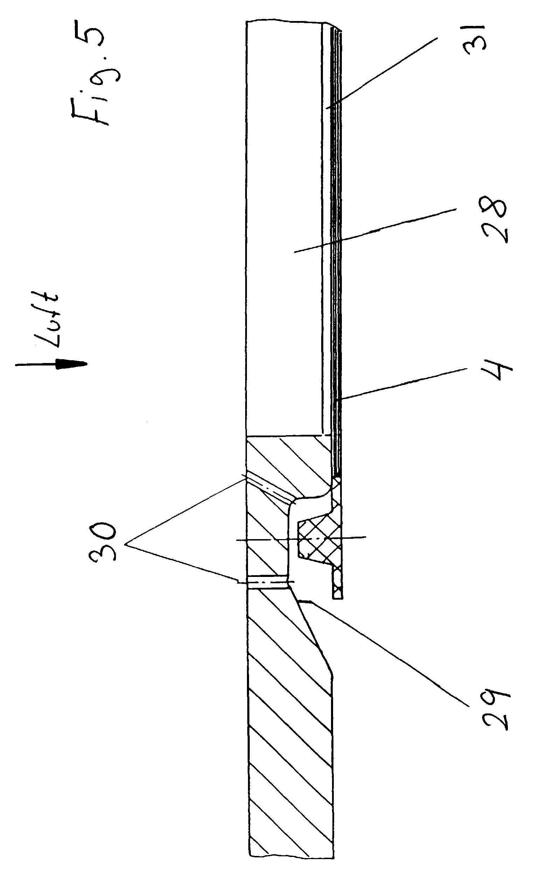

Das Untertrum 4b des Bandes 4 durchläuft einen in den Figuren nicht näher dargestellten Produktraum, eine Sperrluftkammer, eine Bandwaschkammer sowie eine Bandtrocknungskammer, die durch jeweils eine Lufttrennstelle 28 voneinander getrennt sind (siehe Figur 5), in der das Band 4 mit seinem V-Riemen 14 jeweils zwischen abgeschrägten Nutwandungen 29 geführt ist. In letzteren münden zu ihrer Säuberung Luftdüsen 30. Ferner ist oberhalb des Band-Untertrums 4b ein Luftspalt 31 zum Durchblasen des Bandes 4 vorgesehen.

Der V-Riemen 14 kann gemäß DIN 2215 A ausgebildet sein.

## Patentansprüche

1. Filterbandtrockner, insbesondere Sprühtrockner,
mit einem um Umlenkrollen (2, 3) geführten, mit seinem Obertrum (4a) auf einer Bandauflage geführten, endlos umlaufenden Band (4), das das zu trocknende, auf das Band (4) aufgebrachte, vorzugsweise aufgesprühte Produkt als Produktschicht durch zumindest eine Trocknungs- und eine nachgeschaltete Kühlungszone (A, B, C) transportiert, wo Trocknungs- und Kühlluft durch die Produktschicht und durch das Band (4) hindurchgesaugt und unterhalb des Bandes (4) abgeführt werden (12),
ferner mit einem Bandführungssystem (14, 15) für die seitliche Ausrichtung des Bandes (4) bei seinem Umlauf, und mit einem integrierten Bandreinigungssystem (17, 30, 31), **dadurch gekennzeichnet,** daß das Bandführungssystem durch je einen an den Seitenrandbereichen (4c) des Bandes (4) befestigten V-Riemen (14) gebildet ist, die jeweils in eine ihnen zugeordnete ringförmige V-Nut (15) in den Umlenkrollen (2) eingreifen. (Figuren 2 und 3)

2. Filterbandtrockner nach Anspruch 1, **dadurch gekennzeichnet,** daß der V-Riemen (14) in den Seitenwandbereich (4c) des Bandes (4) eingepreßt oder auf diesen aufvulkanisiert ist.

3. Filterbandtrockner nach Anspruch 1 oder 2, **dadurch gekennzeichnet,** daß die beiden Seitenrandbereiche (4c) des Bandes (4) luftundurchlässig ausgebildet, vorzugsweise mit einer luftundurchlässigen Verklebung versehen sind. (Figur 2)

4. Filterbandtrockner nach Anspruch 1, 2 oder 3, **dadurch gekennzeichnet,** daß der Boden der ringförmigen V-Nut (15) in Umfangsrichtung verteilte Langlöcher (17) bzw. Schlitze aufweist, die in einen in axialer Richtung nach außen offenen Ringraum (19) der Umlenkrolle (2) münden. (Figur 3)

5. Filterbandtrockner nach einem der vorhergehenden Ansprüche, **dadurch gekennzeichnet,** daß sich die Umlenkrollen (2, 3) jeweils über die volle Breite des Bandes (4) erstrecken, dessen Obertrum (4a) zwischen der vorderen und hinteren Umlenkrolle (2) über oben abgerundete Flacheisen (20), Rundstäbe oder Rohre abgestützt ist, die vorzugsweise ähnlich einem Fischgrätenmuster angeordnet sind.

6. Filterbandtrockner nach einem der vorhergehenden Ansprüche, **dadurch gekennzeichnet,** daß sich im Obertrum (4a) des Bandes (4) der V-Riemen (14) zwischen der vorderen und hinteren Umlenkrolle (2) auf einem quer zum Band (4) schräg nach innen und unten geneigten Gleitblech (21) abstützt. (Figur 4)

7. Filterbandtrockner nach Anspruch 5 und 6, **dadurch gekennzeichnet,** daß das Gleitblech (21) Teil einer jeweils seitlich am Maschinengehäuse (22) befestigten Stützvorrichtung (23) ist, zwischen denen die das Band-Obertrum (4a) abstützenden Flacheisen (20) befestigt sind. (Figur 4)

8. Filterbandtrockner nach Anspruch 6 oder 7, **dadurch gekennzeichnet,** daß das Gleitblech (21) mit dem Boden (24) eines darüber angeordneten Luftkastens (25) einen den zugeordneten Randbereich (4c) des Bandes (4) aufnehmenden Spalt (26) bildet, über dem sich in Bandlängsrichtung erstreckende, unmittelbar oberhalb des Bandes (4) angeordnete Luftaustrittsschlitze (27) befinden. (Figur 4)

9. Filterbandtrockner nach einem der vorhergehenden Ansprüche, **dadurch gekennzeichnet,** daß das Untertrum (4b) des Bandes (4) einen Produktraum, eine Bandwaschkammer, eine separate Sperrluftkammer und/oder eine Bandtrocknungskammer durchläuft.

10. Filterbandtrockner nach Anspruch 9, **dadurch gekennzeichnet,** daß die Kammern durch eine Lufttrennstelle (28) voneinander getrennt sind, in der das Band (4) mit seinen V-Riemen (14) jeweils zwischen abgeschrägten Nutwandungen (29) geführt ist, in denen Luftdüsen (30) münden. (Figur 5)

11. Filterbandtrockner nach Anspruch 9 oder 10, **dadurch gekennzeichnet,** daß oberhalb des Band-Untertrum (4b) ein Luftspalt (31) zum Durchblasen des Bandes (4) vorgesehen ist. (Figur 5)
